# EUROPÄISCHE PATENTSCHRIFT

(11) **EP 1 752 677 B1**
(45) Veröffentlichungstag und Bekanntmachung des Hinweises auf die Patenterteilung: **30.07.2008**
(21) Anmeldenummer: 06010067.4
(22) Anmeldetag: 16.05.2006
(51) Int. Cl.: F16D 65/097, F16D 65/092

(54) **Bremsbelag mit integrierter Niederhaltefeder und Verfahren zur Herstellung des Bremsbelages**
Brake pad holder and brake pad for a disc brake
Support de garniture de frein et garniture de frein pour frein à disque

(30) Priorität: 12.08.2005 DE 102005038298
(43) Veröffentlichungstag der Anmeldung: 14.02.2007
(73) Patentinhaber: Federal-Mogul Friction Products GmbH, 65520 Bad Camberg (DE)
(72) Erfinder: Emmet, Robert 46 Willow Park Road, York YO 415 PS (GB); Strauss, Wilfried, 69483 Wald-Michelbach (DE)
(74) Vertreter: Becker Kurig Straus

(56) Entgegenhaltungen:
- EP-A1- 0 339 984
- EP-A1- 1 275 870
- EP-A2- 0 565 337
- EP-A2- 0 694 707
- AU-A- 4 600 979
- DE-A1- 3 227 195
- DE-A1- 10 026 547
- FR-A1- 2 436 288
- GB-A- 2 316 725

## Beschreibung

Die vorliegende Erfindung betrifft einen Bremsbelag, bevorzugt einen Bremsbelag für eine Scheibenbremse, welcher fest mit einer Niederhaltefeder versehen ist. Des Weiteren betrifft die vorliegende Erfindung ein Verfahren zum Herstellen eines Bremsbelags, welcher eine integrierte bzw. mit dem Belag verbundene Niederhaltefeder umfasst.

Üblicherweise bestehen Scheibenbremsen aus mindestens zwei Bremsbelägen, die in einem Schacht eines Bremssattels angeordnet sind und mit Hilfe eines Haltestiftes und einer Niederhaltefeder in Position gehalten werden. Die Niederhaltefeder stützt sich einerseits an dem Haltestift ab und auf der anderen Seite kontaktiert diese den Bremsbelag, um während des Betriebes der Bremse einen festen Halt zu garantieren, wobei der Halt jedoch elastische Eigenschaften aufweisen sollte. Eine weitere Aufgabe des Niederhaltemechanismus ist es, das Klappern der Bremsbeläge in dem Bremssattel zu unterdrücken, wobei das Klappern zu einer Verkantung der Beläge und somit zu Fehlfunktionen des Bremssystems führen könnte.

Bei den heute üblichen Scheibenbremsen wird der Bremsbelag über eine Öffnung von außen in den Bremssattel gesteckt und mit Niederhaltefedern und Verriegelungen in der Bremse gehalten. Diese Form der Befestigung hat den Vorteil, dass der Bremssattel zum Auswechseln der Bremsbeläge nicht ausgebaut oder abgenommen werden muss. Somit ist es möglich, z. B. bei einem PKW, dass nur das Rad abgebaut zu werden braucht, um die Bremsbeläge zu wechseln.

Ein derartige Bremsbelag ist z.B. aus EP 0 565 337 bekannt.

Bei der Montage eines neuen Bremsbelags werden die Niederhaltefedern jedes Mal auf die Bremsbeläge angebracht, um somit den Bremsbelag in den Bremssattel einzusetzen. Infolgedessen muss der Mechaniker bei jedem Bremsbelagwechsel erstens die Niederhaltefeder einsetzten bevor er überhaupt mit der eigentlichen Montage anfangen kann. Diese Arbeitsschritte sind zeitintensiv und daher kostenspielig für den Kunden einer Werkstatt und sogar für die Werkstatt als solche.

Es ist daher Aufgabe der vorliegenden Erfindung einen Bremsbelag bereitzustellen, um die Probleme und Nachteile des Standes der Technik zu umgehen und zu lösen.

Eine weitere Aufgabe der vorliegenden Erfindung ist es ein Verfahren bereitzustellen, welches die Herstellung eines Bremsbelags mit integrierter bzw. aufgesetzter Niederhaltefeder definiert.

Einer der Vorteile der vorliegenden Erfindung ist das Entfallen von Montagevorgängen der Niederhaltefeder auf den Bremsbelag im Werkstattbereich.

Gemäß einem ersten Aspekt der vorliegenden Erfindung wird ein Bremsbelag mit den Merkmalen des Anspruchs 1 bereitgestellt. Somit wird ein erfindungsgemäßer Bremsbelag bereitgestellt, welcher eine fest eingebaute bzw. integrierte Niederhalte-Feder aufweist, die zum Halten des Bremsbelags in dem jeweiligen Bremssattel dient. Dadurch entfallen zeit- und kostenintensive Arbeitschritte während der Montage des Bremsbelags in eine entsprechende Bremse.

Es wird bevorzugt, dass die Anformungen Angüsse sind, welche im Wesentlichen zylinderförmig gebildet sind und im Wesentlichen im Querschnitt abgerundet sind. Somit kann ein leichtes Anbringen der Niederhaltefeder auf den Angüssen bzw. Anformungen erreicht werden. Bedingt durch den zylinderförmigen Aufbau kann die Niederhaltefeder die jeweiligen Angüsse fest umschließen.

Bevorzugter Weise weisen die Angüsse eine bestimmte Höhe auf und sie verjüngen sich zu deren Stirnfläche hin. Dadurch ist das Anpressen der Niederhaltefeder auf die Angüsse einfacher durchführbar und sie kann erfindungsgemäß in Position gehalten werden.

Es wird bevorzugt, dass die Angüsse eine bestimmte Höhe aufweisen und sich zu deren Basisfläche hin verjüngen. Durch diesen besonderen Aufbau kann dem Herausspringen der Niederhaltefeder von den Angüssen herunter vorgebeugt werden. Somit entsteht eine automatische Verriegelung der Niederhaltefeder in der gewünschten Lage.

Es wird bevorzugt, dass die Trägerplatte und der Reibbelag im Wesentlichen einstückig geformt sind. Dadurch können Herstellungsschritte gespart werden, da der Reibbelag nicht in einem zusätzlichen Arbeitsschritt aufgebracht werden muss.

Es wird bevorzugt, dass die Niederhaltefeder einstückig aus Federblech bzw. Federstahl gebildet ist. Durch die elastischen Eigenschaften des Federblechs kann die Funktionsweise der Niederhaltefeder während des Betriebes verbessert werden.

Es wird bevorzugt, dass die Niederhaltefeder gesickt ist. Durch zusätzliche Sicken oder Kröpfungen oder Verbiegungen im Verlauf der Niederhaltefeder können die elastischen Eigenschaften in vorteilhafter Weise beeinträchtigt werden.

Es wird bevorzugt, dass die Niederhaltefeder einstückig aus einem elastischen metallischen Stahl-Draht geformt ist. Dadurch erhält die Feder eine schmale Gestaltung, und somit kann der Bremsbelag in seine Endposition einfacher ein- oder ausgebaut werden.

Es wird bevorzugt, dass die Niederhaltefeder in deren Kontaktbereich mit den Anformungen, diese im Wesentlichen umschließt. Somit wird ein sicherer Halt der Niederhaltefeder in diesem Kontaktbereich gesichert.

Gemäß einem zweiten Aspekt der vorliegenden Erfindung wird mit Anspruch 10 ein Verfahren zum Herstellen eines Bremsbelags bereitgestellt.

Es wird bevorzugt, dass das Verfahren einen weiteren Schritt des Verarbeitens der Anformungen bzw. Angüsse, um diese auf eine bestimmte Höhe zu formen, umfasst.

Es wird bevorzugt, dass das Verbinden der Niederhaltefeder mit den Anformungen darauf basiert, dass die Niederhaltefeder unter Spannung auf die Anformungen eingesetzt wird. Somit können die biegelastischen Eigenschaften der Niederhaltefeder verwendet werden, um diese zwischen den Angüssen fest zu verhaken bzw. einzuhaken.

Weitere Vorteile und Merkmale der vorliegenden Erfindung werden aus der folgenden Beschreibung von Ausführungsformen der Erfindung ersichtlich, in der auf die angefügte Zeichnung Bezug genommen wird, in der:
Fig. 1 einer perspektivische Darstellung eines Bremsbelags gemäß einer Ausführungsform der vorliegenden Erfindung entspricht; und
Fig. 2 eine Darstellung (Seitenansicht und Draufsicht) des Bremsbelages gemäß einer weiteren Ausführungsform der vorliegenden Erfindung ist.

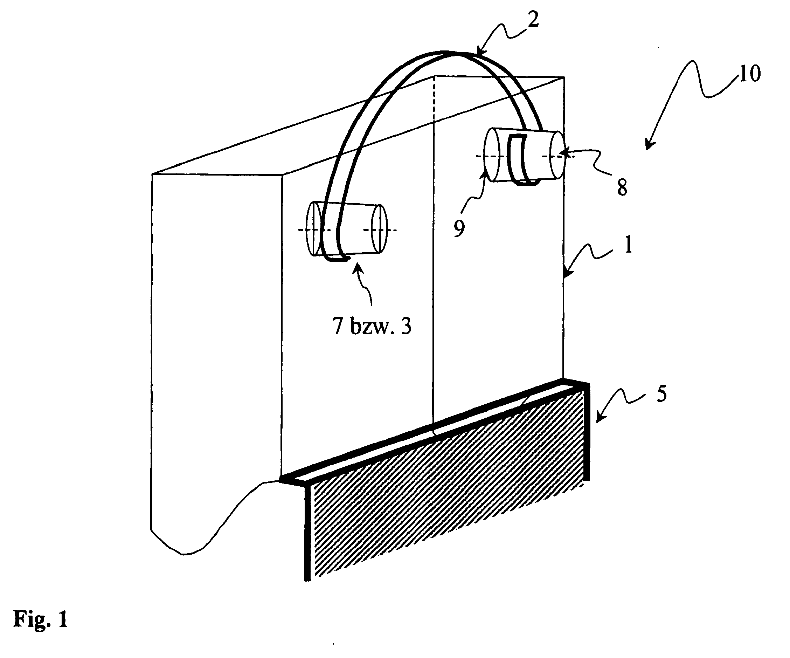

Die Fig. 1 zeigt eine perspektivische Darstellung eines Bremsbelags 10 gemäß der vorliegenden Erfindung. Erfindungsgemäß umfasst der Bremsbelag 10 in dieser Ausfiihrungsform zwei Angüsse bzw. Anformungen 7 bzw. Stifte 3, die sich beide auf einer Seite der Trägerplatte bzw. Tragefläche 1 des Bremsbelages 10 befinden.

Die Begriffe Trägerplatte und Rückenplatte bzw. Gussrückenplatte entsprechen denselben Komponenten des erfindungsgemäßen Bremsbelags.

Weiter umfasst der Bremsbelag 10 einen Reibbelag 5, der im unteren Bereich der Fig. 1 angedeutet ist und sich beispielsweise über die gesamte Fläche der Trägerplatte erstreckt. Der Bremsbelag 5 ist derart ausgebildet, dass während der Verwendung eine Reibung zwischen der Scheibe der Bremse und dem Reibbelag, und somit ein gewünschter Bremseffekt eines Fahrzeugs beispielsweise ereicht wird.

Es sind verschiedene Formen des Reibbelags 5 denkbar und für einen Fachmann ist es selbstverständlich, eine andere Gestaltung des Reibbelags zu wählen. Jedoch sind die Form bzw. Gestaltung des Reibbelags 5 für die vorliegende Erfindung nicht von Bedeutung und werden daher nicht näher betrachtet.

Die Niederhaltefeder 2 gemäß dieser bevorzugten Ausführungsform ist gebogen dargestellt, sie kann aber unterschiedliche Formen aufweisen, die für einen spezifischen Aufbau der Scheibenbremse bzw. des Bremssattels notwendig sind. Ferner kann die Niederhaltefeder 2 eine Sicke (oder mehrere Sicken) aufweisen, die eine weitere Verbesserung der Elastizität der Feder 2 bewirken. Auch denkbar ist die Verwendung mehrerer Niederhaltefedern 2 um eine bessere Stabilität des Bremsbelags im eingebauten Zustand zu erreichen. Somit wird der Bremsbelag in Position gehalten und er kann elastisch dem Klappern des Belags 10 im Bremssattel (nicht dargestellt) vorbeugen.

Gemäß dieser Ausführungsform der Erfindung erfolgt die Anbindung der Niederhaltefeder 2 zur Trägerplatte 1 mit Hilfe von Angüssen 7, die einen zylinderförmigen Aufbau aufweisen. In diesem Fall der Fig. 1 haben die Angüsse 7 eine konische Verjüngung, jedoch es sind ebenfalls andere Gestaltungen denkbar. Der Querschnitt der Angüsse 7 ist im Wesentlichen rund, kreisrund, elliptisch oder kreis-elliptisch. Auch andere Querschnitte können gewählt werden. So ist es denkbar, dass der Querschnitt einer mehreckigen geometrischen Form entspricht, wie beispielsweise einem Hexagon, Pentagon oder desgleichen.

Die hauptsächliche Aufgabe der Anformungen ist im Wesentlichen die Niederhaltefeder 2 an der Trägerplatte 1 zu halten. Die Niederhaltefeder 2 kann aus Federstahl hergestellt werden, da so die gewünschte Elastizität der Feder 2 gesichert werden kann. Durch die erfindungsgemäße Umformung der Niederhaltefeder im Kontaktbereich mit dem Anguss 7 kann die Elastizität des Federstahls voll ausgenutzt werden. Somit wird sich die Niederhaltefeder 2 mit dem Anguss 7 beidseitig, in dieser bevorzugten Ausführungsform, fest verhaken und der erfindungsgemäße Bremsbelag hat nun eine fest integriere Niederhaltefeder 2.

Erfindungsgemäß wird als zusätzliche Sicherung der Niederhaltefeder 2 im Kontaktbereich mit den Anformungen 7 kann eine Schweißstelle verwendet, um ein unerwünschtes Herausspringen bzw. Herausfallen der Feder 2 zu sichern.

Auch denkbar ist, dass die Niederhaltefeder im Kontaktbereich die Anformungen 7 vollständig umschließt, so dass in diesem Fall (nicht dargestellt in den Figuren) die Feder 2 seitlich auf die Angüsse verschoben werden muss und mittels eines Sicherungsstiftes (nicht gezeigt), beispielsweise, festgemacht werden muss. Da die Niederhaltefeder unter Spannung montiert bzw. angebracht wird, stellt sie nun die benötigte Elastizität bereit und kann dem Klappern bzw. Verkanten des gesamten Bremsbelags in dem jeweiligen Bremssattel vorbeugen.

Ferner können die Angüsse 7 als Stifte 3 realisiert werden und somit eine ähnliche Funktionsweise wie gemäß den Angüssen aus Fig. 1 bereitstellen.

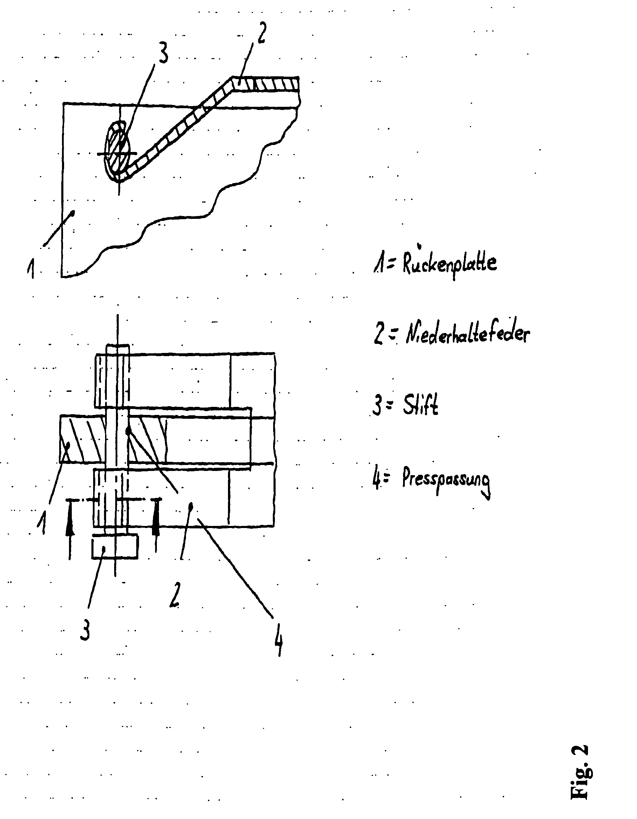

Eine zweite mögliche Ausführungsform der vorliegenden Erfindung wird in den Querschnittsdarstellungen aus Fig. 2 gezeigt.

Fig.2 entspricht zwei Querschnitten eines Bremsbelags im Bereich der Trägerplatte 1 bzw. Rückenplatte 1. Der obere Teil der Fig. 1 zeigt eine seitliche Ansicht auf einen Stift 3, der eine analoge Funktionsweise wie die vorstehend erwähnten Angüsse 7 aufweist. Wie klar zu erkennen ist, umschließt die Niederhaltefeder 2 den Stift 3 oder auch Anguss 7 fast vollständig und weist somit eine feste Verbindung indirekt mit der Trägerplatte des Bremsbelags auf. In diesem Fall hat die Niederhaltefeder 2 eine leicht andere Form im Vergleich zu der Niederhaltefeder 2 aus der Fig. 1. Sie weist eine Kröpfung bzw. eine Verbiegung auf, um beispielsweise die Gesamthöhe des Bauteils 10 bzw. Bremsbelags 10 zu verringern. Die Verbiegung kann sich ebenfalls positiv auf die elastischen Eigenschaften der Feder 2 auswirken, und im Falle einer Feder 2 aus Stahlblech gegebener Breite, kann sie eine Versteifung bei seitlichen bzw. Querschlägen bewirken. Somit kann einer seitlichen Verkantung des Bremsbelags entgegen gewirkt werden.

Der untere Teil der Figur 2 zeigt eine Draufsicht des Bereichs der Trägerplatte 1, in dem deutlich der Aufbau der Niederhaltefeder 2 dargestellt ist. In diesem Fall wurde die Trägerplatte 1 auf beiden Seiten mit Niederhaltefedern 2 versehen und der Stift 3 wurde daher länger hergestellt, um ausreichend auf beiden Seiten der Trägerplatte bzw. Rückenplatte 1 hinauszuragen.

In dieser bevorzugten Ausführungsform wird der Stift 3 mittels starkem Druck, Presspassung 4, in die dafür vorgesehenen Bohrungen in der Trägerplatte eingebrachts beispielsweise gehämmert, jedoch können mit einer ähnliche Funktionsweise ebenfalls Angüsse 7 bereitgestellt werden.

Gemäß den beiden näher erläuterten Ausführungsformen wird ein Bremsbelag bereitgestellt, der fest mit der Niederhaltefeder verbunden ist und bei dem die Niederhaltefeder 2 nicht bei jeder Montage des Bremsbelags in eine Bremse jedes Mal eingesetzt werden muss. Somit kann die Arbeit eines Mechanikers erleichtert werden und auch die Produktivität bei sinkenden Kosten gesteigert werden.

Im Folgenden wird nun kurz ein Verfahren zum Herstellen eines Bremsbelags 10 gemäß einer Ausführungsform der Erfindung erläutert.

Die bezüglich der Figuren oben erwähnte Gußrückenplatte 1 bzw. Trägerplatte 1 erhält am oberen Bereich zwei Anformungen auf jeder Seite. Diese Anformungen sind nahezu rund ausgerührt. Die Niederhaltefeder wird nach dem Belagpressen in der Endbearbeitungslinie auf den Belag aufgesetzt und über eine Vorrichtung in die vorgegebene Position gedrückt. Nach diesem Vorgang ist die Niederhaltefeder fest mit dem Belag verriegelt, sie wird dann mit bestimmten Abschnitten der Anformungen verschweißt und kann nicht mehr demontiert werden.

Es sind verschiedene Ausführungsformen bzw. Anordnungen der Angüsse bzw. Stifte in der Trägerplatte für einen Fachmann denkbar.

## Patentansprüche

1. Bremsbelag (10), umfassend eine Trägerplatte (1), mindestens einen Reibbelag (5) und mindestens eine an der Trägerplatte (1) befestigte Niederhaltefeder (2) zum Halten des Bremsbelags, wobei die Trägerplatte (1) auf mindestens einer ihrer Flächen mit Anformungen (7) versehen ist, an denen die mindestens eine Niederhaltefeder (2) befestigt ist, derart, dass die Niederhaltefeder (2) und die Anformungen (7) fest miteinander verriegelt sind, wodurch die Niederhaltefeder (2) mit der Trägerplatte (1) verbunden ist, **dadurch gekennzeichnet, dass** zusätzlich die Niederhaltefeder mit bestimmten Abschnitten der Anformungen (7) der Trägerplatte verschweißt ist.

2. Bremsbelag nach Anspruch 1, wobei die Anformungen (7) Angüsse sind, die im Wesentlichen zylinderförmig gebildet sind und im Wesentlichen im Querschnitt abgerundet sind.

3. Bremsbelag nach Anspruch 2, wobei die Anformungen (7) eine bestimmte Höhe aufweisen und sich zu deren Stirnfläche (8) hin verjüngen.

4. Bremsbelag nach Anspruch 2, wobei die Anformungen (7) eine bestimmte Höhe aufweisen und sich zu deren Basisfläche (9) hin verjüngen.

5. Bremsbelag nach Anspruch 1, wobei die Trägerplatte (1) und der Reibbelag (5) einstückig geformt sind.

6. Bremsbelag nach irgendeinem der vorhergehenden Ansprüche, wobei die Niederhaltefeder (2) einstückig aus Federblech bzw. Federstahl gebildet ist.

7. Bremsbelag nach irgendeinem der vorhergehenden Ansprüche, wobei die Niederhaltefeder (2) gesickt ist.

8. Bremsbelag nach irgendeinem der vorhergehenden Ansprüche, wobei die Niederhaltefeder (2) einstückig aus einem elastischen Stahl-Draht geformt ist.

9. Bremsbelag nach irgendeinem der vorhergehenden Ansprüche, wobei die Niederhaltefeder (2) in deren Kontaktbereich mit den Anformungen (7), diese im

10. Verfahren zum Herstellen eines Bremsbelags (10), umfassend die Schritte:
- Bereitstellen einer Trägerplatte;
- Bilden von Anformungen (7) auf mindestens einer Fläche der Trägerplatte (1), so dass die Anformungen (7) und die Trägerplatte (1) einstückig sind;
- Bereitstellen einer Niederhaltefeder (2);
- Pressen des Reibbelags (5) in einem vorherbestimmten Bereich der Trägerplatte (1);
- Verbinden der Niederhaltefeder (2) mit den Anformungen (7) der Trägerplatte (1) in solch einer Weise, dass die Niderhaltefeder (2) und die Anformungen (7) fest miteinander verriegelt sind;
- **gekennzeichnet durch**
- Verschweißen der Niederhaltefeder (2) mit bestimmten Abschnitten der Anformungen (7) der Trägerplatte (1).

11. Verfahren nach Anspruch 10, weiter umfassend:
- Bearbeiten der Anformungen (7), um diese auf eine bestimmte Höhe zu bringen.

12. Verfahren nach Anspruch 10 oder 11, wobei das Verbinden der Niederhaltefeder (2) mit den Anformungen (7) darauf basiert, dass die Niederhaltefeder unter Spannung auf die Anformungen (7) eingesetzt wird.

## Claims

1. Brake lining (10) comprising a support plate (1), at least one friction lining (5) and at least one holding-down spring (2) secured to the support plate (1) to hold the brake lining, wherein the support plate (1) is provided on at least one of its surfaces with moulded areas (7) on which the at least one holding-down spring (2) is secured in such a way that the holding-down spring (2) and the moulded areas (7) are firmly locked together by means of which the holding-down spring (2) is connected to the support plate (1), **characterised in that** additionally the holding-down spring is welded to certain sections of the moulded areas (7) of the support plate.

2. Brake lining according to claim 1, wherein the moulded areas (7) are gates which are substantially cylinder-shaped and have a substantially rounded cross section.

3. Brake lining according to claim 2, wherein the moulded areas (7) have a specific height and taper toward their end face (8).

4. Brake lining according to claim 2, wherein the moulded areas (7) have a specific height and taper toward their base (9).

5. Brake lining according to claim 1, wherein the support plate (1) and the friction lining (5) are moulded as one piece.

6. Brake lining according to any one of the preceding claims, wherein the holding-down spring (2) is formed as one piece of spring metal sheet or spring steel.

7. Brake lining according to any one of the preceding claims, wherein the holding-down spring (2) is beaded.

8. Brake lining according to any one of the preceding claims, wherein the holding-down spring (2) is moulded as one piece from an elastic steel wire.

9. Brake lining according to any one of the preceding claims, wherein, in its contact area with the moulded areas (7), the holding-down spring (2) substantially encloses said moulded areas.

10. Method for the production of a brake lining (10), comprising the steps:
- provision of a support plate
- formation of moulded areas (7) on at least one surface of the support plate (1), so that the moulded areas (7) and the support plate (1) are in one piece
- provision of a holding-down spring (2)
- pressing of the friction lining (5) in a predetermined area of the support plate (1)
- connection of the holding-down spring (2) to the moulded areas (7) of the support plate (1) in such a way that the holding-down spring (2) and the moulded areas (7) are firmly locked together.
- **characterised by**
- welding of the holding-down spring (2) to specific sections of the moulded areas (7) of the support plate (1)

11. Method according to claim 10, further comprising:
- machining of the moulded areas (7) to bring them to a specific height.

12. Method according to claim 10 or claim 11, wherein the connection of the holding-down spring (2) with the moulded areas (7) is based on the fact that the holding-down spring is inserted on the moulded areas (7) under tension.

## Revendications

1. Garniture de frein (10) comprenant une plaque de support (1), au moins une garniture de friction (5) et au moins un ressort de maintien en position (2) fixé à la plaque de support (1) pour maintenir la garniture de frein, dans laquelle la plaque de support (1) est munie, sur au moins l'une de ses faces, de moulages (7) sur lesquels le au moins un ressort de maintien en position (2) est fixé de telle manière que le ressort de maintien en position (2) et les moulages (7) sont bloqués les uns avec les autres, de sorte que le ressort de maintien en position (2) est raccordé à la plaque de support (1), **caractérisée en ce que** le ressort de maintien en position est, en outre, soudé avec des tronçons déterminés des moulages (7) de la plaque de support.

2. Garniture de frein selon la revendication 1, dans laquelle les moulages (7) sont des bossages qui ont une forme sensiblement cylindrique et qui sont sensiblement arrondis en section transversale.

3. Garniture de frein selon la revendication 2, dans laquelle les moulages (7) ont une hauteur déterminée et s'amincissent en direction de leur face frontale (8).

4. Garniture de frein selon la revendication 2, dans laquelle les moulages (7) ont une hauteur déterminée et s'amincissent en direction de leur face de base (9).

5. Garniture de frein selon la revendication 1, dans laquelle la plaque de support (1) et la garniture de friction (5) sont moulées d'un seul tenant.

6. Garniture de frein selon l'une quelconque des revendications précédentes, dans laquelle le ressort de maintien en position (2) est constitué d'une tôle à ressort ou d'acier à ressort monobloc.

7. Garniture de frein selon l'une quelconque des revendications précédentes, dans laquelle le ressort de maintien en position (2) est nervuré.

8. Garniture de frein selon l'une quelconque des revendications précédentes, dans laquelle le ressort de maintien en position (2) est constitué d'un fil d'acier élastique monobloc.

9. Garniture de frein selon l'une quelconque des revendications précédentes, dans laquelle le ressort de maintien en position (2), dans sa zone de contact avec les moulages (7), entoure sensiblement ceux-ci.

10. Procédé pour la fabrication d'une garniture de frein (10) comprenant les étapes consistant à :
- prévoir une plaque de support ;
- former des moulages (7) sur au moins une face de la plaque de support (1), de sorte que les moulages (7) et la plaque de support (1) sont d'un seul tenant ;
- prévoir un ressort de maintien en position (2) ;
- compresser la garniture de friction (5) dans une zone prédéterminée de la plaque de support (1) ;
- raccorder le ressort de maintien en position (2) avec les moulages (7) de la plaque de support (1) de telle manière que le ressort de maintien en position (2) et les moulages (7) sont bloqués les uns avec les autres ;
**caractérisé par**
- le soudage du ressort de maintien en position (2) avec des tronçons déterminés des moulages (7) de la plaque de support (1).

11. Procédé selon la revendication 10, comprenant, en outre :
- l'usinage des moulages (7) pour les amener à une hauteur déterminée.

12. Procédé selon la revendication 10 ou 11, dans lequel le raccordement du ressort de maintien en position (2) avec les moulages (7) est basé sur le fait que le ressort de maintien en position est mis sous tension sur les moulages (7).
